# EUROPÄISCHE PATENTSCHRIFT

(11) **EP 0 635 697 B1**
(45) Veröffentlichungstag und Bekanntmachung des Hinweises auf die Patenterteilung: **23.09.1998**
(21) Anmeldenummer: 94105588.1
(22) Anmeldetag: 12.04.1994
(51) Int. Cl.: G01B 11/00, G01B 9/02

(54) **Messeinrichtung**
Measuring arrangement
Arrangement de mesure

(30) Priorität: 20.07.1993 DE 9310820 U
(43) Veröffentlichungstag der Anmeldung: 25.01.1995
(73) Patentinhaber: Raff, Helmut, 71717 Beilstein (DE)
(72) Erfinder: Raff, Helmut, 71717 Beilstein (DE)

(56) Entgegenhaltungen:
- EP-A- 0 144 546
- EP-A- 0 362 625
- EP-A- 0 531 102
- WO-A-89/03516
- DE-A- 3 436 848
- DE-A- 4 313 076

## Beschreibung

Die Erfindung betrifft eine Meßeinrichtung mit einem Meßkopf für die Laser-unterstützte Längen- und Entfernungsmessung von bzw. zu Meßobjekten nach dem Oberbegriff des Patentanspruchs 1.

Aus der Fachliteratur "Fertigungsmesstechnik", ab Seite 264, ist das Laserinterferometer als Meßsystem bekannt. Mit einem Laserinterferometer lassen sich Verschiebewege über große Längen mit extrem gleichmäßiger Teilung erfassen. Das Laserinterferometer stellt dabei ein optisches Meßgerät für die Längenmessung dar und setzt als Lichtquelle einen Helium-Neon-Gaslaser (HeNe-Laser) ein. Ein wichtiges Merkmal für die interferometrische Messung ist die Wellenlänge der ausgesandten Strahlung. Eingesetzt werden in der Praxis sogenannte Ein-Moden-Laserinterferometer und Zwei-Frequenzen-Interferometer. Durch die Signalverarbeitung wird die Lichtmodulation des Laserlichtes infolge der Verschiebung der beiden Teilstrahlen des Interferometers gegeneinander erfaßt. Einsatzbedingte Einflußgrößen auf die Meßunsicherheit bei einem Laserinterferometer sind die Umgebungsbedingungen und der Einfluß der Temperatur des Meßobjektes.

Die DE 34 36 848 C2 offenbart eine Anordnung zur Positionierung von Meßobjekten bei waagerecht antastenden Einkoordinatenmeßgeräten. Zwischen zwei Pinolenträger für eine Meß- und eine Gegenpinole ist das Meßobjekt auf einem Meßtisch angeordnet.

Die beiden Pinolenträger sind waagerecht zueinander auf gleicher Achse zueinander verschiebbar. Die Pinolen sind mit Meßtastern bestückt.

Aus der DE 43 13 076 A1, veröffentlicht am 28.10.1993, ist ein Interferometer mit einer Laserlichtquelle und mit einem Strahlteiler zur Aufteilung des Laserlichtes bekannt. Der Interferometerkopf als Meßkopf steht mit dem Laserinterferometer in einer Leitungsverbindung und besitzt Einrichtungen für das Aussenden und Empfangen des Laserstrahles. Der ausgesandte Laserstrahl trifft dabei auf einen verschieblichen Reflektor.

Durch die EP 0 144 546 B1 ist eine Mehrkoordinaten-Messmaschine offenbart, die mehrere unabhängige interferometrische Längenmeßsysteme zur Erfassung von Verschiebungen, Verdrehungen oder Verkippungen von Maschinenteilen aufweist. Es ist ein Meßkopf eingerichtet, der mit einem Laserinterferometer verbunden ist und dazu Einrichtungen für die Aussendung und den Empfang des Laserstrahles besitzt. Der Meßkopf ist außerdem auswechselbar in die Mehrkoordinaten- Messmaschine einsetzbar.

Ausgehend von dem geschilderten Stand der Technik ist es Aufgabe der Erfindung, eine Meßeinrichtung der eingangs genannten Art zu schaffen, die mit einem geringen technischen Aufwand vielseitig einsetzbar ist und den Anforderungen an die Produktionsgenauigkeit von Produkten und einem wirtschaftlichen und genauen Messen gerecht wird.

Erfindungsgemäß wird die Aufgabe durch die Merkmale des Anspruchs 1 gelöst. Vorteilhafte Ausgestaltungen und Weiterbildungen sind den abhängigen Ansprüchen 2 und 3 zu entnehmen.

Durch den herausnehmbaren Miniatur-Meßkopf, der mit dem HeNe-Laser durch ein Glasfaserkabel verbunden ist, wird die Vielseitigkeit und die Mehrfachanwendung der Meßeinrichtung hervorgehoben, ohne dabei den Aufwand und damit die Investitionskosten zu erhöhen. Durch die ständig höher angesetzte Produktionsgenauigkeit muß auch die Präzision der Meßeinrichtung steigen. Sie muß immer um den Faktor 10 genauer sein. Für ein Überwachungsgerät von Meß- und Prüfmitteln gilt nun ebenfalls der Faktor 10, was bedeutet, daß die höchstmögliche Genauigkeit der Meßeinrichtung gerade ausreicht, um Prüfmittel zu überwachen.

Der Meßschlitten für den verschiebbaren Meßtaster ist mit einer einstellbaren definierten Meßkraftregelung und einer Feinjustage versehen. In der Meßkopfaufnahme können wahlweise herausnehmbare Sensoren zur Kompensation von Luftdruck, Luftfeuchtigkeit und Lufttemperatur integriert werden. Die von 20° C abweichende Temperatur stellt bislang eine große Fehlerquelle für das exakte Messen dar. Das Messen mit höchster Genauigkeit war deshalb nur in aufwendig klimatisierten Meßräumen möglich. Durch die eingesetzten und wahlweise austauschbaren Sensoren wird der Laserstrahl kompensiert.

Höchste Genauigkeit setzt voraus, daß der Laserstrahl exakt mit den Meßtastern fluchtet, was durch die Konstruktion nach dem Abbe'schen Prinzip möglich gemacht ist.

Da das Laserlicht über ein trittfestes Glasfaserkabel von der HeNe-Laserquelle der Meßeinrichtung zugeführt wird, verhält sich der Meßkopf der Meßeinrichtung thermisch völlig passiv.

Der herausnehmbare Meßkopf mit der kompletten Sensorik und der optischen Einrichtung zur Aussendung von Laserstrahlen und zum Empfang von reflektierten Laserstrahlen ist von besonderem Vorteil. Denn es bietet sich damit die Möglichkeit, Produktionsmaschinen auf Positioniergenauigkeit, Ebenheit, Geradheit und Flucht zu vermessen oder spezielle Meßaufbauten zu realisieren.

In der Zeichnung ist ein Beispiel der Erfindung dargestellt. Es zeigen:
- Figur 1: eine Meß- und Prüfvorrichtung mit auswechselbarer Meßeinrichtung in perspektivischer Ansicht
- Figur 2: die Meßeinrichtung mit einem Meßkopf in anderer perspektivischer, vergrößerter Ansicht aus der Richtung des Pfeiles II in Figur 1.

Eine Meß- und Prüfvorrichtung 1, beispielsweise für die Überwachung von Prüfmitteln wie Lehren und Dornen, besteht aus einem Grundgestell 2 aus Hartgestein. Dieses Grundgestell 2 ruht auf Lagern 3 mit einer Dreipunkt-Auflage. Am hinteren, stirnseitigen Ende des Grundgestells 2 ist ein Meßtaster 4 in einem ortsfest montierten Tasterhalter 5 angeordnet. Der Meßtaster 4 ist dabei waagerecht ausgerichtet.

In einem veränderbaren Abstand zum ortsfesten Meßtaster 4 befindet sich ein zweiter Meßtaster 6, der ebenfalls waagerecht ausgerichtet ist und dessen Längsachse mit der Längsachse des ortsfesten Meßtasters 4 fluchtet. Die Verschiebung dieses zweiten Meßtasters 6 erfolgt mittels einem durch Spindelantrieb bewegbaren Meßschlitten 7, der manuell durch ein Handrad 8 oder auch motorisch verstellt werden kann.

Zwischen den beiden auf gleicher Achse angeordneten Meßtastern 4 und 6 befindet sich ein Meßtisch 9 für die Aufnahme eines Meßobjektes 10, beispielsweise eines Prüfmittels. Der Meßtisch 9 ist sowohl in der Längsachse der Meßtaster als auch in der Höhe verstellbar, um so ein genaues und individuelles Positionieren des Meßobjektes 10 zwischen den Meßtastern 4 und 6 zu ermöglichen.

Am anderen Stirnende des Grundgestells 2 ist ein Träger 11 für die auswechselbare Meßeinrichtung 12 ortsfest aufgebaut. In einer Führungsnut 13 am Kopf des Trägers 11 ist die Meßeinrichtung 12 mit ihrem Meßkopf 14 eingesetzt, wobei die Austrittsöffnung 15 für den Laserstrahl 16 bzw. die Eintrittsöffnung für den vom Meßobjekt 10 oder dem verschiebbaren Meßtaster 6 reflektierten Laserstrahl derart positioniert ist, daß der Laserstrahl 16 exakt mit der Längsachse der Meßtaster 4 und 6 fluchtet. Der ausgesandte Laserstrahl 16 trifft dadurch präzise auf die dem Meßobjekt 10 abgewandte Stirnfläche 17 des verschieblichen Meßtasters 6. Zum Schutz für die Bedienungsperson ist die Strecke zwischen der Meßeinrichtung 12 und dem verschieblichen Meßtaster 6 weitgehend durch einen Faltenbalg 18 abgedeckt, so daß in den Laserstrahl 16 im Regelfall nicht eingegriffen werden kann.

Der Meßkopf 14 ist durch ein trittfestes Glasfaserkabel 19 mit einem Laserinterferometer 20 verbunden, dessen HeNe-Laserlichtquelle bei 21 angedeutet ist. In dem Träger 11 für die Meßeinrichtung 12 ist eine sogenannte Wetterstation 22 für die Erfassung des Luftdrucks, der Luftfeuchtigkeit und der Lufttemperatur vorgesehen, wobei die Aufnahme der vorherrschenden Umweltbedingungen durch an sich bekannte Sensoren erfolgt. In dem Meßkopf 14 der Meßeinrichtung 12 sind optische Einrichtungen für die Aussendung des Laserstrahles 16 und für den Empfang des reflektierten Laserstrahles vorgesehen. Über entsprechende Leitungen 23 ist der Meßkopf 14 mit einer Meßwertauswerteeinheit 24 und einer Meßwertanzeige 25 verbunden.

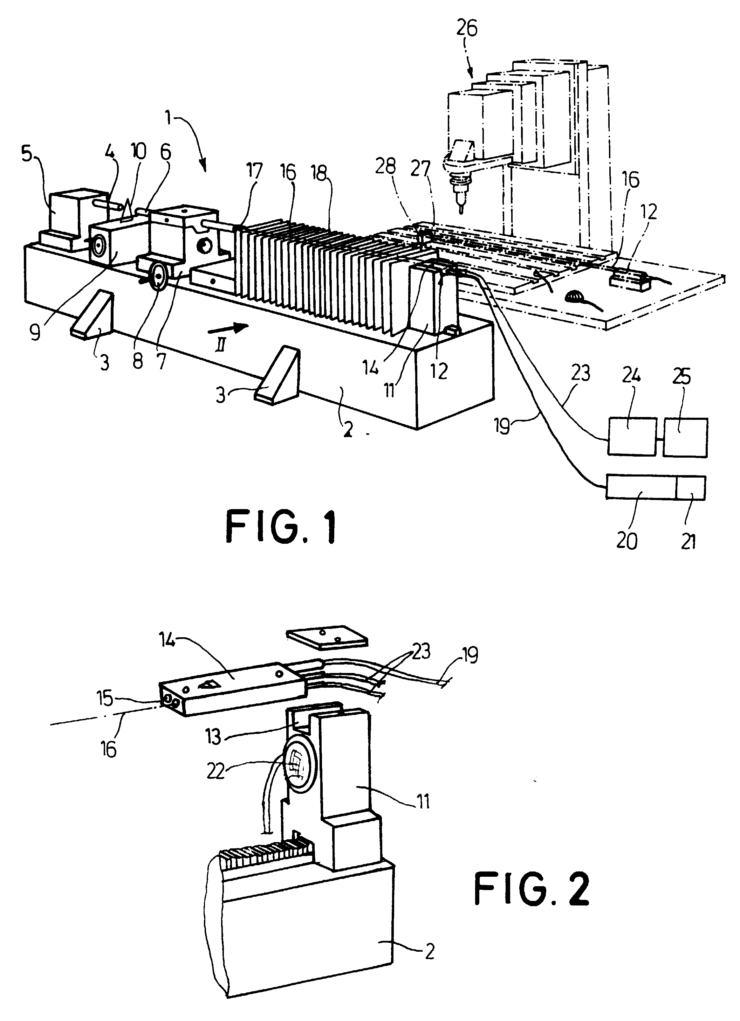

Wie aus Figur 1 ersichtlich ist, besteht der Vorteil der auswechselbaren Meßeinrichtung 12 unter anderem auch in der vielseitigen Anwendung. Durch strich-punktierte Linien ist hinter der Meßvorrichtung 1 eine Koordinatenmeßmaschine 26 gezeigt, auf deren Meßtisch 27 ein Meßobjekt 28 dargestellt ist. Die aus der Meßvorrichtung 1 herausgenommene Meßeinrichtung 12 befindet sich ebenfalls auf dem Meßtisch 27 oder einer anderen Fläche zur Feststellung der Position des Meßobjektes 28. Die Meßeinrichtung 12 ist manuell auf dem Meßtisch 27 bewegbar.

Selbstverständlich sind noch weitere Anwendungsfälle und Einsatzmöglichkeiten für die Meßeinrichtung 12 denkbar.

Die Halterung des Meßkopfes 14 in der Führungsnut 13 geschieht durch Schrauben 29, mit denen eine Abdeckplatte 30 auf dem Träger 11 befestigt wird. Darüberhinaus ist auch eine direkte Verschraubung des Meßkopfes 14 mit dem Träger 11 möglich.

## Patentansprüche

1. Ein-Koordinaten-Meßeinrichtung mit einem auswechselbar einsetzbaren Meßkopf (14) für laser-unterstützte Längen- und Entfernungsmessung von bzw. zu Meßobjekten, wobei der Meßkopf (14) ein Laserinterferometer (20) und Einrichtungen für das Aussenden eines Laserstrahles und das Empfangen eines reflektierten Laserstrahles (16) aufweist und mit einer Meßwertauswerteeinheit (24) und einer Meßwertanzeige verbunden ist,
wobei
in der Meßeinrichtung (1) und im Abstand zum Meßkopf (14) zwei zueinander axial in der Koordinatenachse beabstandete Meßtaster (5,6) vorgesehen sind, deren Längsachsen miteinander fluchten,
der zum Meßkopf (14) nähere erste Meßtaster (6) in der Koordinatenachse axial verschieblich ist,
der erste Meßtaster (6) eine erste Stirnfläche aufweist, die auf die zugewandte Stirnfläche des zweiten Meßtasters (5) ausgerichtet ist,
der erste Meßtaster (6) eine zweite Stirnfläche aufweist, die der ersten Stirnfläche entgegengesetzt und auf den ausgesandten Laserstrahl (16) des Laserinterferometers (20) ausgerichtet ist, und
der erste Meßtaster (6) in bzw. an einem Meßschlitten (7) mit einer definierten, einstellbaren Meßkraftregelung und Feinjustierung befestigt ist.

2. Meßeinrichtung nach Anspruch 1,
wobei
der Meßkopf (14) durch eine Glasfaserleitung (19) mit dem Laserinterferometer (20) verbunden ist und optische Einrichtungen zum Aussenden und Empfangen des vom ersten Meßtaster (6) oder einem Meßobjekt (10,28) reflektierten Laserstrahles (16) aufweist.

3. Meßeinrichtung nach Anspruch 1 oder 2,
wobei
der Meßkopf (14) wahlweise einsetzbare Sensoren für die Messung von Luftfeuchtigkeit, Lufttemperatur und Temperatur des Meßobjektes (10) sowie den Luftdruck aufweist, die mit der Meßwertauswerteeinheit (24) zur Kompensation der Meßergebnisse verbunden sind.

## Claims

1. A single-coordinate measuring arrangement having an interchangeably usable measuring head (14) for laser-assisted length and distance measurement from or to objects to be measured, wherein the measuring head (14) has a laser interferometer (20) and devices for emitting a laser beam and receiving a reflected laser beam (16), and is connected to a measurement value evaluation unit (24) and a measurement value display, wherein
provided in the measuring arrangement (1) and at a spacing relative to the measuring head (14) are two measuring sensors (5, 6) which are spaced relative to each other axially on the coordinate axis and the longitudinal axes of which are aligned with each other,
the first measuring sensor (6) which is closer to the measuring head (14) is axially displaceable on the coordinate axis,
the first measuring sensor (6) has a first end face which is aligned with the facing end face of the second measuring sensor (5),
the first measuring sensor (6) has a second end face which is opposite to the first end face and which is aligned with the emitted laser beam (16) of the laser interferometer (20), and
the first measuring sensor (6) is fixed in or on a measuring carriage (7) with a defined adjustable measuring force regulation and fine adjustment.

2. A measuring arrangement according to claim 1 wherein the measuring head (14) is connected by a glass fibre line (19) to the laser interferometer (20) and has optical devices for emitting and receiving the laser beam (16) reflected by the first measuring sensor (6) or an object (10, 28) to be measured.

3. A measuring arrangement according to claim 1 or claim 2 wherein the measuring head (14) has selectively usable sensors for the measurement of air humidity, air temperature and temperature of the object (10) to be measured as well as the air pressure, which are connected to the measurement value evaluation unit (24) for compensation of the measurement results.

## Revendications

1. Dispositif de mesure à un axe de coordonnées comportant une tête de mesure (14) pouvant être mise en place de manière interchangeable pour la mesure, assistée par laser, de la longueur et de la distance, d'objets de mesure ou par rapport à ceux-ci, la tête de mesure (14) comportant un interféromètre à laser (20) et des dispositifs pour l'émission d'un rayon laser et la réception d'un rayon laser (16) réfléchi, et étant reliée à une unité (24) d'exploitation des valeurs mesurées et à un afficheur de valeurs mesurées,
dans lequel sont prévus, dans le dispositif de mesure (1) et à distance de la tête de mesure (14), deux palpeurs de mesure (5, 6) qui sont espacés axialement l'un de l'autre selon l'axe des coordonnées, et dont les axes longitudinaux sont alignés entre eux,
le premier palpeur de mesure (6), le plus proche de la tête de mesure (14), peut coulisser axialement selon l'axe des coordonnées,
le premier palpeur de mesure (6) présente une première face frontale qui est orientée vers la face frontale tournée vers lui du deuxième palpeur de mesure (5),
le premier palpeur de mesure (6) présente une deuxième face frontale, qui est opposée à la première face frontale et qui est orientée vers le rayon laser (16) émis par l'interféromètre à laser (20), et
le premier palpeur de mesure (6) est fixé dans ou sur un chariot de mesure (7) avec une régulation définie et réglable de la pression de mesure et un ajustage fin.

2. Dispositif de mesure selon la revendication 1, dans lequel la tête de mesure (14) est reliée à l'interféromètre à laser (20) par une ligne à fibres de verre (19) et comporte des dispositifs optiques pour l'émission et la réception du rayon laser (16) réfléchi par le premier palpeur de mesure (6) ou par un objet de mesure (10, 28).

3. Dispositif de mesure selon la revendication 1 ou 2, dans lequel la tête de mesure (14) comporte des capteurs pouvant être mis en place au choix pour la mesure de l'humidité de l'air, de la température de l'air et de la température de l'objet de mesure (10) ainsi que de la pression de l'air, lesquels capteurs sont reliés à l'unité (24) d'exploitation des valeurs mesurées en vue de la compensation des résultats de la mesure.
